Europäisches Patentamt

(19) **European Patent Office**

**Office européen des brevets**

(11) Numéro de publication: **0 163 565**
**B1**

(12) **FASCICULE DE BREVET EUROPÉEN**

(45) Date de publication du fascicule du brevet:
12.08.87

(51) Int. Cl.⁴: **C 01 B 7/19**

(21) Numéro de dépôt: **85400886.9**

(22) Date de dépôt: **07.05.85**

(54) **Procédé de fabrication d'acide fluorhydrique par réaction de l'acide sulfurique sur le spath fluor dans un four tournant.**

(30) Priorité: **18.05.84 FR 8407719**

(43) Date de publication de la demande:
**04.12.85 Bulletin 85/49**

(45) Mention de la délivrance du brevet:
**12.08.87 Bulletin 87/33**

(84) Etats contractants désignés:
**DE FR NL**

(56) Documents cité:
**FR-A-1 154 796**
**FR-A-1 436 984**
**FR-A-2 069 238**
**GB-A-554 127**

(73) Titulaire: **ATOCHEM, 4 & 8, Cours Michelet La Défense 10, F-92800 Puteaux (FR)**

(72) Inventeur: **Laroche, Pierre, 14 rue P. Chevrel, F-69370 Saint Didier Au Mont D'Or (FR)**
Inventeur: **Thiery, Pascal, 40 Boulevard du Général de Gaulle, F-69600 Oullins (FR)**
Inventeur: **Verot, Yvan, 20 rue du Prieuré, F-69130 Ecully (FR)**

(74) Mandataire: **Leboulenger, Jean, ATOCHEM Département Propriété Industrielle, F-92091 Paris la Défense 10 Cédex 42 (FR)**

EP 0 163 565 B1

**Description**

La présente invention concerne la fabrication d'acide fluorhydrique par réaction de l'acide sulfurique sur le spath fluor dans un four tournant chauffé extérieurement.

La réaction d'attaque du spath fluor par l'acide sulfurique est endothermique. Pour qu'elle se déroule dans de bonnes conditions industriellement, elle requiert la mise en oeuvre d'agitation et d'apport thermique. Dans son déroulement jusqu'à 70-80 % avancecement, cette réaction franchit plusieurs étapes qui successivement et/ou simultanément s'avèrent corrosives et encroûantes.

Pour cette partie de la réaction, l'appareillage utilisé doit pouvoir surmonter ces inconvénients, c'est-à-dire d'une part être construit en ou revêtu de matériaux anticorrosion et d'autre part muni de moyens d'agitation de sorte à éviter ou détruire les enrochements des parois.

Au delà de 70-80 % et en tous cas au délà de 80 % d'avancement, la réaction ne présente plus de phénoménes corrosifs encroûtants.

Sur tout ce qui est dit précédemment, plusieurs procédés de fabrication d'acide fluorhydrique à partir de spath fuor et d'acide sulfurique ont été développés pour en pallier les inconvénients.

Une première catégorie de fours réalise la totalité de la réaction en subissant toutes les phases de celle-ci. On inclut aussi dans cette catégorie les fours munis de prémélangeurs de matières premières qui, même si l'on préchauffe les matières premières, délivrent au four une masse réactionnelle qui est caractérisée par un taux de conversion limité et inférieur à 25-30 %, compte tenu du très faible temps de séjour offert par ce type d'appareils.

Ce type d'installation doit traiter les différentes étapes de la réaction, ce qui implique:
. soit de mettre en oeuvre des dispositifs de raclage pour assurer le transfert thermique malgré les encroûtements, et aussi des éléments de protection protégeant les parois du four contre la corrosion;
. soit d'utiliser des fours de grandes dimensions dans lesquels on pourra retenir un important volume de masse réactionnelle, dans laquelle se mélangeront les matières premières introduites, ceci afin de diminuer les effets corrosifs et, en évitant les encroûtements, de favoriser le transfert thermique.

Du fait de l'apparition possible d'enrochement des parois et aussi de la corrosion qui s'y développe, ce type d'installation exige une technologie éprouvée, onéreuse et nécessitant des arrêts réguliers pour entretien.

Dans une deuxième catégorie de procédés, le four réalise encore la totalité de la réaction. Néanmoins, par un dispositif approprié, on recycle en tête une quantité adaptée de la masse réactionnelle ayant plus ou moins partiellement réagi. On assure ainsi en tête de four une composition spath-acide sulfurique équivalente à un taux de transformation de 80 % et en tous cas supérieur à 70 %.

Ce type d'installation fonctionne donc comme si l'on n'avait à traiter la réaction que dans la partie où le taux d'avancement varie de 80 % à 97-99 % et ceci grâce à un débit de recyclage adapté au régime du four.

Dans ce type d'installation, on doit disposer de fours de grandes dimensions, afin d'assurer un temps de séjour suffisant à la masse réactionnelle car la cinétique de la réaction reste très lente dès que l'on a dépassé 80 % de taux de conversion. En outre, le mélange réactionnel initial se trouve à l'état pâteux, ce qui conduit à la formation de mottes qui gênent inévitablement le bon déroulement de la réaction.

Dans une troisième catégorie de procédés, la réaction est assurée de 0 à 97-99 % par l'attelage d'un préréacteur et d'un four. Les matières premières préalablement préchauffées sont introduites dans un appareil de conception spéciale d'un volume suffisant et muni d'aménagements permettant l'apport de calories. Ceci permet d'atteindre en sortie de préréacteur un taux de conversion compris entre 40 et 50 %. Ce préréacteur délivre alors au four une masse réactionnelle pulvérulente légérement humide (imprégnée d'acide sulfurique).

Le taux de conversion à la sortie du préréacteur étant limité à une valeur très inférieure à 70 %, le four doit encore faire face à la deuxième phase corrosive et encroûtante; il est donc nécessaire de mettre en oeuvre des dispositifs de râclage associés à des revêtements anticorrosion, ou bien de disposer de fours de dimensions importantes pour permettre la rétention d'un grand volume de masse réactionnelle.

La présente invention pallie les inconvénients de l'art antérieur ci-dessus et fournit un procédé de fabrication d'acide fluorhydrique par réaction de l'acide sulfurique sur du spath fluor dans lequel

a) on alimente en acide sulfurique et en spath fluor un dispositif de prémélange ou de préréaction fonctionnant de façon à obtenir à sa sortie un produit pulvérulent dont le taux de conversion est compris entre 40 et 50 %, puis

b) on introduit à une température comprise entre 20 et 120°C ledit produit pulvérulent dans un four tournant fonctionnant à une température comprise entre environ 80 et 350°C dans lequel il se forme de l'acide fluorhydrique et du sulfate de calcium, et simultanément

c) on effectue un recyclage du produit de réaction dans le four de façon telle que l'on recycle entre environ 3 et 3,5 moles de sulfate de calcium par mole de fluorure de calcium contenu dans le produit pulvérulent entrant dans le four.

Les différents éléments d'une installation utilisable dans le présent procédé ainsi que leur fonctionnement sont à présent décrits plus en détails ci-dessous.

**Préréacteur:**

Cet appareil réalisé avec des matériaux résistant à la corrosion en présence d'acide fluorhydrique et d'acide sulfurique permet un mélange intime des réactifs et en assure le malaxage continu pour favoriser les échanges de matières et de chaleur nécessaires au déroulement de la réaction. La conception de cet appareil permet également un apport calorifique important par réchauffage de toutes les surfaces en contact avec la masse réactionnelle et aussi un avancement régulier du produit limitant les phénomènes de rétromélangeage

Un tel appareil, alimenté avec des matières premières correctement préchauffées à 80-120°C, permet d'obtenir en sortie d'appareil un produit pulvérulent à 80-100°C dont le taux de conversion est de 40-50 %, l'acide fluorhydrique produit par la réaction étant en grande partie dégazé. Selon un autre mode de réalisation de l'invention, le temps de séjour moyen dans le préréacteur est compris entre 8 et 15 minutes.

A l'intérieur du préréacteur, la température doit être suffisante et ajustée de telle manière que l'on puisse assurer le taux de conversion désiré à la sortie de cet appareil.

Les moyens de chauffage et d'apport calorifique doivent être compatibles avec la tenue des matériaux de construction. Par ailleurs, les réactions exothermiques de l'acide sulfurique sur les impuretés du spath fluor constituent pour une part l'apport calorifique nécessaire. L'un des moyens d'apport calorifique consiste à introduire, par un moyen adapté, en quantité et rapport convenables de l'oléum et de la vapeur d'eau. Toutefois, cette introduction doit être effectuée par un dispositif approprié pour éviter des surconcentrations locales et les corrosions qui peuvent en résulter.

Puisque la cinétique de réaction de l'acide sulfurique sur le spath fluor dépend du niveau thermique auquel cette réaction s'effectue, le volume du préréacteur doit être ajusté de façon connue en fonction des températures des réactifs et du chauffage de l'appareil lui-même et du coefficient d'échange obtenu.

Pour des réactifs convenablement préchauffés et un mélangeage intime de la masse réactionnelle, une valeur convenable du volume utile nécessaire dans le préréacteur est d'environ 750 litres par tonne d'acide fluorhydrique produite à l'heure au total.

Cet appareil doit être relié au four par un ensemble muni d'un dispositif d'étanchéité qui empêche les échanges avec l'atmosphère environnante et assure le dégazage de l'acide fluorhydrique vers l'unité de traitement des gaz.

**Prémélangeur**

Si l'on ne dispose pas d'un préréacteur, l'étape a) du procédé selon l'invention peut également être réalisée dans un prémélangeur. Ce dispositif connu ne permet en général pas d'apport calorifique important, mais assure simplement le malaxage et le mélange intime des réactifs qui peuvent être préchauffés ou non.

Il est cependant nécessaire dans ce cas, pour obtenir en sortie un mélange correspondant à un taux de conversion de 40 à 50 % ayant le caractère pulvérulent caractéristique du procédé selon l'invention, d'ajouter à l'acide sulfurique et au spath fluor, du sulfate de calcium à raison d'environ 0,7 à 1 mole par mole de fluorure de calcium introduit initialement.

Le temps de séjour dans le prémélangeur est en général très court. En l'absence d'apport calorifique, il ne s'y produit pratiquement pas de réaction et donc qu'une très faible production d'acide fluorhydrique. Néanmoins, comme dans le cas du préréacteur, le prémélangeur doit être relié au four par un dispositif d'étanchéité et de dégazage.

**Four**

Le four reçoit la masse réactionnelle pulvérulente sortant du préréacteur ou du prémélangeur et assure son traitement jusqu'au taux de conversion désiré. Il s'agit d'un four construit essentiellement en acier ordinaire supportant les températures de fonctionnement. Le chauffage peut être assuré, par exemple, grâce à la circulation de gaz chaud dans une double enveloppe calorifugée.

Le principe de fonctionnement consiste dans le recyclage de produit ayant presque les caractéristiques de l'anhydrite extrait de façon à obtenir, après mélange avec la masse réactionnelle sortant du préréacteur ou du prémélangeur, une composition équivalente à un taux de conversion de 80 % et en tous cas supérieur à 70 %.

Le débit de produit recyclé dépend de l'efficacité du premier élément du dispositif et de la composition du produit recyclé. On peut néanmoins considérer que, pour un taux de conversion en sortie du préréacteur ou du prémélangeur de 40 à 50 %, le débit de recyclage est avantageusement de 225 kg à 300 kg/h par tonne d'acide fluorhydrique produit au total par jour (soit environ 3 à 3,5 moles de $CaSO_4$ recyclé pour 1 mole de $CaF_2$ entrant dans le four).

Les paramètres de fonctionnement peuvent être aisément ajustés en fonction de la qualité des matières premières, des dimensions propres de chaque appareil, des températures de réchauffage des matières premières et des températures des fluides caloporteurs utilisés pour le réchauffage du préréacteur et du four.

La masse réactionnelle est de préférence introduite dans le four à une température de 20 à 100°C environ et

3

ressort à une température d'environ 300°C. Dans ces conditions, le temps de séjour moyen préféré est compris entre 60 et 150 mn., le temps de séjour moyen optimal étant d'environ 120 mn. Le four est donc dimensionné pour de tels impératifs.

Si on le désire, on peut également recycler en petite quantité des sous-produits contenant de l'acide fluorhydrique (HF dilué ou acide fluosulfonique).

Le procédé de la présente invention permet la fabrication en continu d'acide fluorhydrique avec d'excellents rendements, de l'ordre de 98-99 %.

Les problèmes d'enrochements et de corrosion des parois ayant disparu, la fréquence des arrêts pour incidents ou entretien est donc réduite aux seules opérations d'entretien de routine et visite des appareils pour vérification mécanique. Les frais d'entretien sont donc moindres que ceux des procédés de l'art antérieur.

Par ailleurs, le mélange intime des réactifs dans le préréacteur et le recyclage continu des produits dans le four assurent une stabilité des rendements ainsi qu'une qualité excellente et constante de l'anhydrite sous-produite, ce qui en facilite la valorisation.

En outre, le procédé de l'invention peut aussi s'appliquer à la modification d'installations existantes. En effet, en disposant d'un volume de séjour correspondant à environ 120 mn de temps de séjour moyen, le four voit sa capacité instantanée de production doubler, après modification selon la présente invention (ajout d'un préréacteur et recyclage). La capacité moyenne de production devient supérieure au double de celle du dispositif de l'art antérieur avant modification car la durée des arrêts pour incidents, pannes ou entretien est réduite.

Il en est de même, quoique à un degré moindre (augmentation d'environ un tiers) dans le cas d'une installation du type prémélangeur + four.

La présente invention est illustrée et comparée à la technique antérieure dans les exemples suivants en utilisant un spath fluor de qualité "Acid Grade" et un acide sulfurique à 99 % en poids.

**Exemple 1**

On utilise un four tournant ayant une longueur de 11,9 m et un diamètre de 1,9 m et fonctionnant selon l'une des configurations suivantes:

- avec un dispositif de raclage (configuration A)
- avec un prémélangeur sans recyclage (configuration B)
- avec un préréacteur sans recyclage (configuration C)
- avec recyclage interne d'anhydrite (configuration D)
- selon l'invention avec un préréacteur et recyclage interne d'anhydrite (configuration E)
- selon l'invention avec un prémélangeur et recyclage d'anhydrite au prémélangeur et au four (configuration F)

Le tableau I suivant rassemble les conditions de marche suivies et la capacité de production obtenue dans chaque cas.

4

**Tableau 1**

| Configuration | Débit de matières premières (kg/heure) | | Température (°C) des matières premières | | Température (°C) des produits entrant dans le four | Vitesse de rotation du four (tours/mn). |
|---|---|---|---|---|---|---|
| | Spath Fluor | $H_2SO_4$ | Spath fluor | $H_2SO_4$ | | |
| A | 1466,6 | 1800 | 20 | 20 | 20 | 3,5 |
| B | 1627,5 | 2001,75 | 20 | 80 | 60 | 3,5 |
| C | 2215,2 | 2724,6 | 80 | 100 | 80 | 3,5 |
| D | 1808,3 | 2224,2 | 20 | 20 | 20 | 8 |
| E | 2893,3 | 3558,6 | 80 | 100 | 80 | 8 |
| F | 1989,1 | 2446,5 (a) | 20 | 20 | 20 | 8 |

(a) on recycle dans le prémélangeur 2300 à 3500 kg/h d'anhydrite à 20° C

**Suite Tableau I**

| Configuration | Températures de chauffage du du four (°C) | Produit recyclé (anhydrite) | | Températures (°C) des produits sortant du four | | Capacité de production (tonnes/jour) |
|---|---|---|---|---|---|---|
| | | Débit kg/h | Temp. °C | Gaz brut : Solide HF : (anhydrite) | | |
| A | 350/400 à 550/600 | - | - | $120^{+}_{-}20$ | $280^{+}_{-}20$ | 16 |
| B | 350/400 à 550/600 | - | - | $120^{+}_{-}20$ | $280^{+}_{-}20$ | 18 |
| C | 450/500 à 550/600 | - | - | $120^{+}_{-}20$ | $280^{+}_{-}20$ | 24,5 |
| D | 400/450 à 550/600 | 9000 à 15000 | $260^{+}_{-}20$ | $120^{+}_{-}20$ | $280^{+}_{-}20$ | 20 |
| E | 450/500 à 550/600 | 7200 à 9600 | $260^{+}_{-}20$ | $120^{+}_{-}20$ | $280^{+}_{-}20$ | 32 |
| F | 450/500 à 550/600 | 8250 à 13200 | $260^{+}_{-}20$ | $120^{+}_{-}20$ | $280^{+}_{-}20$ | 22 |

5

**Exemple 2**

On répète l'exemple 1 dans un four tournant de 18 m de long et de 2,5 m de diamètre et en modifiant les débits comme indiqué au Tableau II suivant, les autres conditions de marche restant identiques.

**Tableau II**

| Confi-guration | Débit de matières premières (kg/heure) | | Débit de produit recyclé (anhydrite) en kg/h | Capacité de production (tonnes/jour) |
|---|---|---|---|---|
| | Spath fluor : | $H_2SO_4$ : | | |
| A | 2893,3 | 3558,6 | - | 32 |
| B | 3255,0 | 4003,5 | - | 36 |
| C | 3978,3 | 4893,2 | - | 44 |
| D | 3707,1 | 4559,5 | 18500 à 28700 | 41 |
| E | 5786,6 | 7117,3 | 14400 à 19200 | 64 |
| F | 3978,2 | 4893,0 | 16500 à 26400 (b) | 44 |

(b) On recycle en outre dans le prémélangeur 4600 à 7000 kg/h d'anhydrite à 20°C.

**Revendications**

1. Procédé de fabrication d'acide fluorhydrique par réaction de l'acide sulfurique sur du spath fluor, caractérisé en ce que:

a) on alimente en acide sulfurique et en spath fluor un dispositif de prémélange ou de préréaction fonctionnant de façon à obtenir à sa sortie un produit pulvérulent dont le taux de conversion est compris entre 40 et 50 %; puis

b) on introduit à une température comprise entre 20 et 120°C ledit produit pulvérulent dans un four tournant fonctionnant à une température comprise entre environ 80 et 350°C dans lequel il se forme de l'acide fluorhydrique et du sulfate de calcium, et simultanément

c) on effectue un recyclage du produit de réaction au four de façon telle que l'on recycle entre environ 3 et 3,5 moles de sulfate de calcium par mole de fluorure de calcium contenu dans le produit pulvérulent entrant dans le four.

2. Procédé selon la revendication 1, dans lequel on réalise l'étape a) dans un préréacteur alimenté avec de l'acide sulfurique et du spath fluor préchauffés à une température de 80 à 120°C, le temps de séjour moyen dans le préréacteur étant compris entre 8 et 15 minutes.

3. Procédé selon la revendication 1, dans lequel on réalise l'étape a) dans un prémélangeur alimenté avec de l'acide sulfurique et du spath fluor préchauffés ou non et avec du sulfate de calcium à raison d'environ 0,7 à 1

6

**0 163 565**

mole de sulfate de calcium par mole de fluorure de calcium introduit initialement.

4. Procédé selon l'une des revendications 1 à 3, dans lequel le temps de séjour moyen du produit dans le four tournant est compris entre 60 et 150 minutes.

## Claims

1. Process for the manufacture of hydrofluoric acid by reaction of sulphuric acid with fluorospar, characterised in that

a/ the sulfuric acid and the fluorospar are fed to a prereaction or premixer device operating so as to produce at its exit a pulverulent product the conversion rate of which is between 40 and 50 %; then

b/ the said pulverulent product is introduced at a temperature of between 20 and 120°C into a rotating oven operating at a temperature of between approximately 80 and 350°C in which hydrofluoric acid and calcium sulphate are formed, and simultaneously

c/ recycling of the reaction product to the oven is carried out in such a manner that between approximately 3 and 3.5 moles of calcium sulphate are recycled per mole of calcium fluoride contained in the pulverulent product entering the oven.

2. Process according to Claim 1, in which step (a) is carried out in a prereactor fed with sulphuric acid and fluorospar which are preheated to a temperature of 80 to 120°C, the mean residence time in the prereactor being between 8 and 15 minutes.

3. Process according to Claim 1, i, which step (a) is carried out in a premixer fed with sulphuric acid and fluorospar which are preheated or not, and with calcium sulphate in a ratio of about 0.7 to 1 mol, of calcium sulphate per each mole of calcium fluoride introduced initially.

4. Process according to any of claims 1 to 3, in which the mean recidence time of the product in the rotatin. oven is between 60 and 150 minutes.

## Patentansprüche

1. Verfahren zur Herstellung von Fluorwasserstoffsäure durch Reaktion von Schwefelsäure mit Flußspat, dadurch gekennzeichnet, daß man:

a) eine Vorrichtung zur Vormischung oder zur Vorreaktion mit Schwefelsäure und Flußspat beschickt, die so arbeitet, daß an ihrem Ausgang ein pulverförmiges Produkt erhalten wird, dessen Umwandlungsgrad zwischen 40 und 50 % liegt; dann

b) bei einer Temperatur zwischen 20 und 120°C dieses pulverförmige Produkt in einem Drehofen einbringt, der bei einer Temperatur zwischen ungefähr 80 und 350°C arbeitet und, in dem sich Fluorwasserstoffsäure und Calciumsulfat bilden, und gleichzeitig

c) eine Rückführung des Reaktionsprodukts in den Ofen in der Weise durchführt, daß man zwischen ungefähr 3 und 3,5 Mol Calciumsulfat pro Mol Calciumfluorid, das in dem pulverförmigen Produkt, das in den Ofen gelangt, enthalten ist, zurückführt.

2. Verfahren nach Anspruch 1, bei dem man den Schritt a) in einem Vorreaktor ausführt, der mit Schwefelsäure und Flußspat beschickt wird, die auf eine Temperatur von 80 bis 120°C vorgewärmt sind, wobei die mittlere Verweilzeit in dem Vorreaktor zwischen 8 und 15 Minuten liegt.

3. Verfahren nach Anspruch 1, bei dem man den Schritt a) in einem Vormischer ausführt, der mit Schwefelsäure und Flußspat, jeweils vorgewärmt oder nicht, und mit Calciumsulfat in einem Verhältnis von ungefähr 0,7 bis 1 Mol Calciumsulfat pro Mol des ursprünglich eingesetzten Calciumfluorids gespeist wird.

4. Verfahren nach einem der Ansprüche 1 bis 3, bei dem die mittlere Verweilzeit des Produkts im Drehofen zwischen 60 und 150 Minuten liegt.